# EUROPÄISCHE PATENTSCHRIFT

(11) **EP 3 353 434 B1**
(45) Veröffentlichungstag und Bekanntmachung des Hinweises auf die Patenterteilung: **25.12.2019**
(21) Anmeldenummer: 16770743.9
(22) Anmeldetag: 21.09.2016
(51) Int. Cl.: F16C 29/02, F16C 29/12

(54) **LINEARFÜHRUNG MIT SELBSTEINSTELLENDER SPIELREDUZIERUNG**
LINEAR GUIDE HAVING SELF-ADJUSTING PLAY REDUCTION
GUIDE LINÉAIRE AVEC RÉDUCTION DE JEU À RÉGLAGE AUTOMATIQUE

(30) Priorität: 23.09.2015 DE 202015105035 U
(43) Veröffentlichungstag der Anmeldung: 01.08.2018
(73) Patentinhaber: Igus GmbH, 51147 Köln (DE)
(72) Erfinder: MOSHAMMER, Horst, 53545 Linz am Rhein (DE)
(74) Vertreter: Lippert Stachow Patentanwälte Rechtsanwälte
(86) Internationale Anmeldenummer: PCT/EP2016/072389
(87) Internationale Veröffentlichungsnummer: WO 2017/050809

(56) Entgegenhaltungen:
- CH-A- 105 541
- CH-A5- 663 373
- DE-A1-102013 211 869
- DE-B3-102013 004 212
- DE-U1- 20 106 914
- DE-U1-202010 003 706
- GB-A- 2 169 825
- US-A1- 2014 332 654

## Beschreibung

Die Erfindung betrifft eine Linearführung, aufweisend einen Schlitten mit Gleitflächen, eine Schiene mit Führungsgleitflächen, wobei der Schlitten mit seinen an den Führungsgleitflächen angepassten Gleitflächen in einer Verschiebungsrichtung hin und her gleitverschieblich an den Führungsflächen der Schiene geführt ist, und eine selbsteinstellende Spielreduzierung der Linearführung mit mindestens einem Stellelement, wobei das Stellelement in einer Einstellrichtung senkrecht zu der Verschiebungsrichtung des Schlittens in dem Schlitten gelagert ist und der Schlitten eine Aufnahme aufweist, in der das Stellelement in Einstellrichtung gleitverschieblich geführt ist. Linearführungen mit selbsteinstellender Spielreduzierung sind für verschiedenste Anwendungen bereits bekannt, z.B. aus den Patentschriften CH 663 373 A5, DE 10 2013 211 869 A1 oder US 2014/332654 A1. CH 663 373 A5 ist eine gattungsgemäße Linearführung entnehmbar, bei der sich das Stellelement über die Schlittenlänge erstreckt, wobei das Stellelement aufwändig mittels mehrerer über die Länge voneinander angeordnete Tellerfedern senkrecht zur Verschiebungsrichtung gegen die für das Stellelement vorgesehene Führungsfläche der Schiene gedrückt wird. Die Tellerfedern sind jeweils in einer in das Stellelement eingearbeitete Aufnahme angeordnet und drücken senkrecht zur Verschiebungsrichtung auf den Aufnahmeboden gegen das Stellelement. CH 663 373 A5 offenbart die Merkmale des Oberbegriffs der Ansprüche 1 und 15.

In DE 10 2013 004 212 B3 wird eine Linearführung mit einem sich über die Schlittenlänge erstreckenden Stellelement offenbart. Das Stellelement wird mittels einer einstellbaren gewellten Blattfeder senkrecht zur Verschiebungsrichtung gegen die Führungsfläche der Schiene gedrückt. Die Einstellung einer Vorspannung der gewellten Blattfeder erfolgt über mehrere Schrauben, die jeweils seitlich an der Blattfeder angreifen. Alternativ ist das Stellelement über einen geschwächten Bereich einstückig und um eine Schwenkachse parallel zur Verschiebungsrichtung schwenkbeweglich mit dem Schlitten verbunden.

Gemäß US 2014/0332654 A1 weist die Linearführung einen Schlitten und einen Mitnehmer auf, wobei der Mitnehmer an den Führungsflächen eines Gleitkanals in Querrichtung spielfrei verschieblich anliegt. Zur Spielfreiheit sind aufwendig als Stellelemente Keilelemente vorgesehen, die jeweils über eine schiefe Ebene federbelastet in Verfahren Richtung des Schlittens gegen die jeweilige Führungsfläche des Gleitkanals gedrückt werden. Nachteilig ist die mit Verschiebung des Stellelements zwischen den schiefen Ebenen auftretende erhöhte Gleitreibung.

GB 2 169 825 A lehrt eine gattungsgemäße Linearführung mit einem als Keilelement ausgebildeten Stellelement, das in Verschiebungsrichtung federbelastet und über eine schiefe Ebene mit einer Richtungskomponente in Einstellrichtung senkrecht zu der Verschiebungsrichtung des Schlittens in dem Schlitten verschieblich gelagert.

CH 105 541 A1 beschreibt eine Linearführung, bei der zwischen Schlitten und Schiene als Stellelement ein Streifen vorgesehen ist, wobei der Streifen federbelastet senkrecht zur Verschiebungsrichtung gegen die Schiene gedrückt wird. Zur Federbelastung ist eine Druckfeder vorgesehen, die, in Federkraftrichtung durch den Schlitten geführt, auf den Streifen einwirkt.

DE 20 2010 003 706 U1 ist eine Linearführung mit zwei relativ zueinander beweglichen Bauteilen und einem zusätzlichen dazwischen gelagerten Gleitelement entnehmbar, das Gleitflächen zur Ausbildung eines Gleitlagers aufweist. In dem Gleitelement sind Stellelemente vorgesehen, die das Gleitelement über eine gestufte schiefe Ebene gegen Gleitflächen eines der beiden Bauteile anheben. Über diese Maßnahme wird vor dem Betrieb und mittels eines zusätzlichen Werkzeugs eine Festeinstellung der Spielreduzierung der Linearführung vorgenommen.

DE 201 06 914 U1 beschreibt eine Linearführung, bei der das Stellelement über eine geneigte Fläche mit stufenförmigem Profil an eine geneigte Ebene eines Gleitelements mit angepasstem stufenförmigen Profil anliegt und der Schlitten über eine Gleitfläche des Gleitelementes an der Schiene abgleitet. Das Stellelement ist zur selbsteinstellenden Spielreduzierung in Längsrichtung der Schiene federbelastet und gleitet unter Reduzierung des Spiels über seine geneigte Fläche stufenweise an der geneigten Ebene des Gleitelementes ab. Nachteilig hier sind der komplexe Aufbau und die komplexe Montage der Linearführung.

Eine Aufgabe der Erfindung ist, eine einfacher aufgebaute und montierbare Linearführung bereitzustellen.

Die gestellte Aufgabe wird erfindungsgemäß durch die Merkmale der Linearführung gemäß dem Anspruch 1 und des Schlittens gemäß des Anspruchs 15 gelöst. Vorteilhafte Weiterbildungen werden in den Unteransprüchen beschrieben. Die gestellte Aufgabe wird bereits dadurch gelöst, dass die Aufnahme in einer der angepassten Gleitflächen einmündet und dass das Stellelement eine weitere Gleitfläche aufweist, die einen Teilabschnitt dieser zugeordneten angepassten Gleitfläche des Schlittens bilden kann, wobei die weitere Gleitfläche zur Spielreduzierung um einen entsprechenden Betrag über diese zugeordnete angepasste Gleitfläche übersteht.

Die weitere Gleitfläche des Stellelementes kann in die zugeordnete Gleitfläche des Schlittens integriert sein. Sie kann Teil der zugeordneten Gleitfläche sein.

Dadurch, dass das Stützelement bereits einen Abschnitt einer der Gleitflächen des Schlittens bildet, wird der Aufbau der Linearführung vereinfacht. Da die weitere Gleitfläche des Stellelementes Teil der zugeordneten Gleitfläche des Schlittens ist, liegt sie mit dieser Gleitfläche an der dieser Gleitfläche zugeordneten Führungsfläche der Schiene an und kann infolge ihrer relativen Beweglichkeit zu dieser Gleitfläche gegen die Führungsfläche geführt werden. Es kann auf ein zusätzliches Gleitelement verzichtet werden, welches Aufbau und Montage vereinfacht. Da die weitere Gleitfläche des Stellelements zugleich Teil der zugehörigen Gleitfläche des Schlittens bildet, kann der Aufbau zudem kompakter gestaltet werden.

Die Spielreduzierung kann so erfolgen, dass das Spiel des Schlittens in der Schiene reduziert und hier insbesondere minimiert wird, aber auch auf einem bestimmten Wert gebracht werden kann, der zwischen dem Spiel des Schlittens in der Schiene ohne Spielreduzierung und der spielfreien Anordnung des Schlitten in der Schiene liegt.

Das Stellelement kann zur selbsteinstellenden Spielreduzierung in Einstellrichtung senkrecht zu einer Verschiebungsrichtung, in der Schiene und Schlitten relativ zueinander verschiebbar sind, bewegt werden. Die weitere Gleitfläche des Stellelementes kann in der Einstellrichtung relativ zur zugeordneten Gleitfläche des Schlittens entsprechend der Spieleinstellung bewegt, insbesondere verschoben werden. Die weitere Gleitfläche des Stellelementes kann zur Einstellung des Spiels parallel zu der zugeordneten Gleitfläche des Schlittens verschoben werden. Mit der Relativbewegung der weiteren Gleitfläche des Stellelementes zu dem Schlitten kann zugleich das Stellelement verschoben werden. Selbsteinstellende Spielreduzierung heißt, dass sich die Spielreduzierung von selbst, d.h. ohne Eingriff von außen beispielsweise mittels eines Werkzeuges, sondern allein aus dem Zusammenwirken von Schlitten und Schiene erfolgt.

Zur Relativbewegung von Stellelement und Schlitten kann das Stellelement mit einer vorzugsweise einstellbaren oder regelbaren Kraft beaufschlagt werden. Diese Kraft kann beispielsweise magnetisch oder hydraulisch erzeugt werden. Insbesondere kann die Kraft konstant oder nahezu konstant sein.

Vorteilhaft einfach kann die Kraft mittels einer Federvorrichtung, insbesondere mittels einer Spiralfeder oder Tellerfeder, erzeugt werden. Insbesondere kann das Stellelement unter vorzugsweise konstanter Federvorspannung in dem Schlitten gelagert sein. Hierbei kann sich die Feder mit einer Seite in Einstellrichtung an dem Stellelement und gegen Einstellrichtung an dem Schlitten abstützen. Vorteilhaft wegen einer Gefahr des Kriechens bei Kunststofffedern wird vorgeschlagen, dass die Feder aus Metall, vorzugsweise aus Stahl und hier, zur Vermeidung von Korrosion, insbesondere aus Edelstahl gefertigt ist.

Das Stellelement kann hinsichtlich eines einfacheren Verfahrens des Schlittens in der Schiene in dem Schlitten integriert angeordnet sein. Das Stellelement kann Teil des Schlittens sein. Es kann innerhalb der Außenkontur des Schlittens angeordnet sein. Insbesondere kann das Stellelement in einer Arbeitsposition um einen Betrag, vorzugsweise nur um den Betrag der Spielreduzierung über die Außenkontur des Schlittens hinausragen. Es kann für den Fall, dass in der Arbeitsposition keine Spielreduzierung notwendig ist, in einer Ebene mit der ihm zugeordneten Gleitfläche des Schlittens angeordnet sein, wobei im Zuge eines im Betrieb eventuell eintretenden Verschleißes mit wachsendem Spiel als Folge die selbsteinstellende Spielreduzierung dieses Spiel reduziert. Insbesondere kann das Stellelement, bis auf einen Überstand zur Spielreduzierung, vollständig in dem von der Außenkontur des Schlittens umfassten Raum aufgenommen angeordnet sein.

Die Einstellung der Spielreduzierung erfolgt über die Abgleitung der weiteren Gleitfläche des Stellelementes an der ihm zugeordneten Führungsfläche der Schiene. Damit kann die Spielreduzierung vorteilhaft stufenlos erfolgen. Die Spielreduzierung kann durch Parallelverschiebung der weiteren Gleitfläche des Stellelements zu der ihr zugeordneten Führungsfläche erfolgen.

In Vereinfachung der Konstruktion können die Gleitflächen mit Spielreduzierung, insbesondere alle Führungsflächen und Gleitflächen, prismatische Flächen sein. Diese prismatischen Flächen können sich parallel zur Verschiebungsrichtung erstrecken. Insbesondere kann die Linearführung als Prismenführung ausgebildet sein.

Das Stellelement kann in einer weiteren Ausbildungsform der Linearführung in einer Einstellrichtung senkrecht zur Verschiebungsrichtung des Schlittens in dem Schlitten vorzugsweise gleitverschieblich gelagert sein. Damit kann die Parallelverschiebung der weiteren Gleitfläche des Stellelements zu der zugeordneten Gleitfläche des Schlittens in Einstellrichtung erfolgen.

Zur stabilen Gleitlagerung des Schlittens in der Schiene kann der Schlitten ein Gleitflächenpaar mit zwei Gleitflächen aufweisen. Von diesen kann zumindest eine die dem Stellelement zugeordnete Gleitfläche sein. Die beiden Gleitflächen des Gleitflächenpaares können senkrecht und radial nach außen zu der Verschiebungsrichtung des Schlittens in der Schiene in einem Keilwinkel keilförmig zusammenlaufend angeordnet sein. Zur optimalen Abgleitung können die Führungsflächen der Schiene den jeweils zugeordneten Gleitflächen des Schlittens so angepasst und angeordnet sein, dass die einander zugeordneten Gleitflächen in Arbeitsposition weitgehend, insbesondere vollflächig aneinander anliegend angeordnet sind.

In einer Weiterbildung der Linearführung weist der Schlitten eine Aufnahme für das Stellelement auf. In der Aufnahme kann das Stellelement in Einstellrichtung gleitverschieblich geführt angeordnet sein.

Die Aufnahme kann in einer Weiterbildung der Linearführung eine in einer radial-axialen Ebene liegende Seitenfläche zur gleitverschieblichen Anlage des Stellelementes aufweisen. Die Aufnahme kann zum Einsetzen des Stellelements senkrecht zu der radial-axialen Ebene geöffnet ausgebildet sein. Hierbei kann sich die Feder an der Aufnahme und an dem Stellelement abstützen.

Insbesondere kann, bei der oben beschriebenen keilförmigen Anordnung zweier Schienen, die radial-axiale Ebene die Winkelhalbierende des Keilwinkels sein. Hierzu kann das Stellelement bezüglich einer die Verschiebungsrichtung und Einstellrichtung weisenden Längsschnittebene ein Profil in Form eines in Einstellrichtung halbierten Pfeils mit oder ohne abgesetzte Pfeilspitze aufweisen.

Auch wegen der Montage vorteilhaft, kann das Stellelement mit über einen Anschlag begrenztem Stellweg in der Aufnahme geführt angeordnet sein.

Über den Keilwinkel, die in das Stellelement eingeleitete Kraft und/oder die Wahl der Werkstoffpaarung Schlitten/Schiene bzw. Schienen/Führungsflächen kann die Gängigkeit der Linearführung eingestellt werden. Um beispielsweise eine leicht gängige Linearführung zu erhalten, kann der Keilwinkel wesentlich größer als der Keilwinkel sein, bei dem infolge erhöhter Reibungskräfte beim Verfahren eine Selbsthemmung einsetzt. Wird, wie beispielsweise bei Getränkeautomaten oder häufig bei Messtischen, eine Schwergängigkeit gewünscht, so kann der Keilwinkel in seiner Größe nahe der des Selbsthemmung-Keilwinkels ausgelegt sein. Analog können die Werkstoffe der Schienen so ausgewählt sein, dass sie auftretende Reibungskräfte beim Abgleiten zur Leichtgängigkeit minimieren oder zur Schwergängigkeit vergrößern. Schließlich beeinflusst die auf das Stellelement wirkende Kraft auch die Reibungskraft zwischen den Gleitflächen.

Der Schlitten und damit auch die Schiene können jeweils zwei Gleitflächenpaare aufweisen, wobei eines der Gleitflächenpaare des Schlittens die dem Stellelement zugeordnete Gleitfläche aufweist. Insbesondere wegen der keilförmigen Anordnung der Gleitflächen kann insbesondere eine Schwergängigkeit des Schlitten problemlos eingestellt werden, indem der Schlitten mit der Verschiebung des Stellelements unter Spielreduzierung mit seinen übrigen Gleitflächen gegen die Führungsflächen der Schiene bewegt, insbesondere gedrückt werden.

Kraftmechanisch vorteilhaft können die beiden Gleitflächenpaare bezüglich einer Spiegelsymmetrieebene senkrecht zu Einstellrichtung spiegelsymmetrisch zueinander angeordnet sein.

Es können auch beide Gleitflächenpaare des Schlittens jeweils eine Gleitfläche mit zugeordnetem Stellelement aufweisen.

Aus tribologischen Gesichtspunkten ist es vorteilhaft, wenn der Schlitten und das mindestens eine Stellelement aus einem Kunststoff, vorzugsweise einem tribologischen Spezialkunststoff hergestellt sind, welcher schmierfrei mit der Schiene zusammenwirkt. Aus mechanischen Gründen kann die Schiene aus Metall, insbesondere aus Aluminium hergestellt sein. Schlitten und Stellelement sind vorzugsweise aus demselben Tribopolymer, insbesondere im Spritzgussverfahren hergestellt.

Ist in einer Ausbildung der Linearführung lediglich ein Stellelement vorgesehen, so kann dieses Stellelement bezüglich der Verschiebungsrichtung kraftmechanisch günstig mittig an dem Schlitten angeordnet sein.

Sind beispielsweise zwei Stellelemente vorgesehen, so können diese kraftmechanisch günstig bezüglich der Verschiebungsrichtung jeweils in einem axialen Endbereich des Schlittens angeordnet sein. Zur Vermeidung eines Kippmomentes können die Gleitflächen der beiden Stellelemente in der selben Gleitfläche des Schlittens angeordnet sein.

Das Stellelement kann plattenförmig mit geringer Breite ausgebildet sein. Das Stellelement kann in Einstellrichtung länger als in Verschiebungsrichtung ausgebildet sein. Das Verhältnis der Länge des Stellelements in Einstellrichtung zu dessen Breite in Verschiebungsrichtung kann somit >1 bis sogar wesentlich größer als 1 sein. Die Breite des Stellelementes kann beispielsweise kleiner/gleich 50% oder kleiner/gleich 30%, vorzugsweise kleiner/gleich 10% der Länge des Schlittens in Verschiebungsrichtung betragen. Die geringe Breite des Stellelementes hat den Vorteil, dass die zugeordnete Aufnahme dem Schlitten nur entsprechend schmal ausgebildet sein muss und somit die Festigkeit des Schlittens entsprechend gering und damit unwesentlich vermindert ist. Infolge der geringen Breite sind ferner die Kontaktflächen zwischen Einstellelement und Aufnahme und damit die bei Spielreduzierung auftretenden Reibungskräfte entsprechend gering, so dass die zur Spielreduzierung erforderliche Kraft und damit konstruktiv die Feder zur Erzeugung dieser Kraft entsprechend klein ausgelegt sein können. Damit ist eine feine Einstellung der Spielreduzierung möglich. Dies wiederum hat den Vorteil, dass die erforderliche konstruktive feine Einstellung der Spielreduzierung möglich. Dies wiederum hat den Vorteil, dass die erforderliche konstruktive Länge von Feder und Stellelement in Einstellrichtung klein gehalten sein kann. Dies wiederum erfordert eine entsprechend verringerte Schlittenbreite in Einstellrichtung. Somit kann die selbsteinstellende Spielreduzierung der Erfindung und damit die Linearführung im Vergleich zu der zum Stand der Technik erheblich miniaturisiert werden.

Weitere Einzelheiten und Vorteile der Erfindung werden im Folgenden, ohne Einschränkung des Schutzumfangs, durch die Beschreibung einer bevorzugten Ausführungsform unter Bezugnahme auf die beigefügten Zeichnungen ersichtlich. Hierbei zeigen:
- FIG.1:: eine Aufsicht auf eine Ausbildung einer Linearführung mit Schiene und darin linear geführtem Schlitten,
- FIG.2:: eine stirnseitige Ansicht der Linearführung gemäß Figur 1,
- FIG.2a:: eine Ausschnittvergrößerung gemäß dem Ausschnitt B in Figur 2,
- FIG.3:: eine Schnittansicht der Linearführung gemäß dem Schnittverlauf c-c in Figur 1,
- FIG.3a:: eine Ausschnittvergrößerung gemäß dem Ausschnitt C in Figur 2,
- FIG.4:: eine Unteransicht des Schlittens gemäß Figur 1,
- FIG.5:: eine perspektivische Unteransicht des Schlittens gemäß Figur 4 und
- FIGUREN 6a und 6b:: jeweils eine perspektivische Explosionsdarstellung des Schlittens gemäß Figur 4.

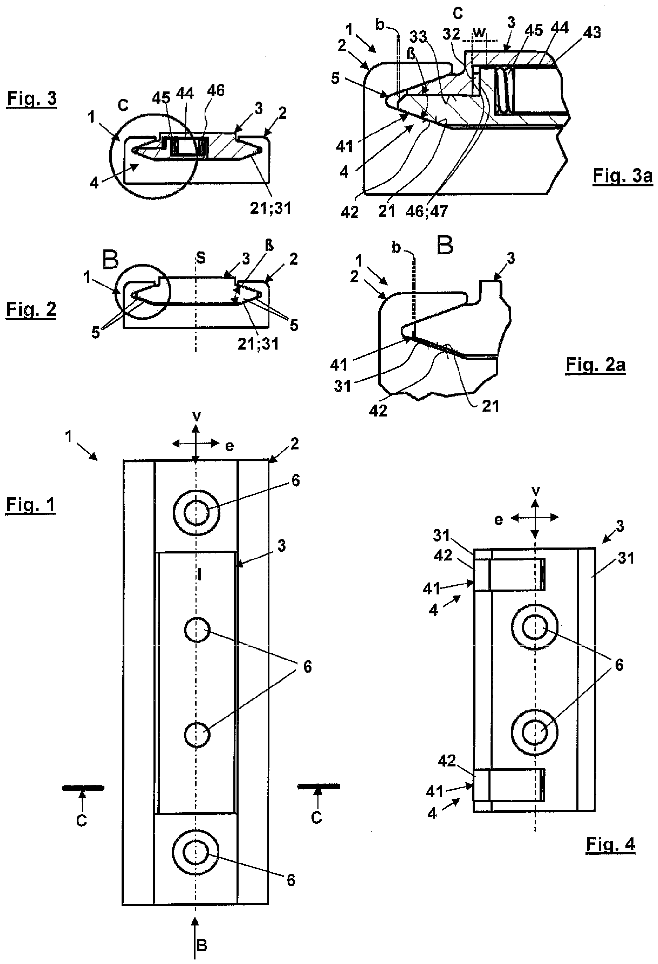

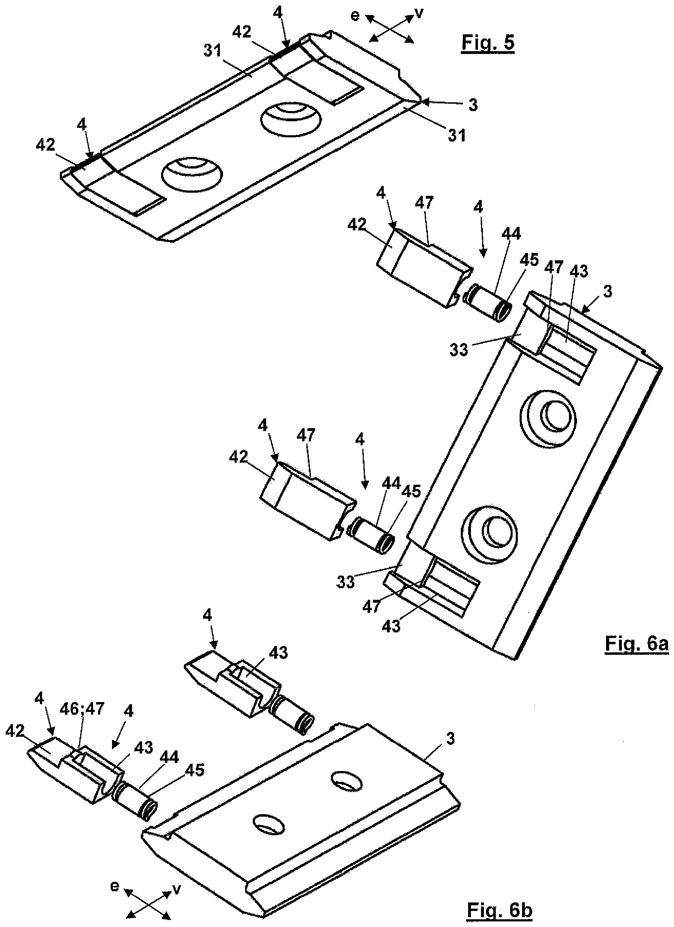

In den Figuren 1-3 wird jeweils eine bevorzugte Ausführungsform einer Linearführung 1 mit einer Schiene 2, einem in der Schiene 2 geführtem Schlitten 3 und einer selbst einstellenden Spielreduzierung 4 der Linearführung 1 mit einem Stellelement 41 gezeigt. Die Figuren 4-6 geben in verschiedenen Darstellungen den Schlitten 3 mit der Spielreduzierung 4 wieder.

Die Schiene 2 weist hier vier Führungsflächen 21 auf, an denen der Schlitten 3 mit hier entsprechend vier Gleitflächen 31 in Verschiebungsrichtung v gleitverschieblich gelagert und geführt ist. Wie insbesondere aus Figur 4 ersichtlich, weist das Stellelement 41 eine weitere Gleitfläche 42 auf, die einen Abschnitt a der in Figur 4 rechten Gleitfläche 31 bildet. Sämtliche Führungsflächen 21 und Gleitflächen 31,42 sind in dieser Ausführungsform des Schlittens 1 als in Verschiebungsrichtung v verlaufende prismatische Flächen ausgebildet. Es sind die Führungsflächen 21 und Gleitflächen 31, 42 so aneinander angepasst, dass, in Einbaulage von Schlitten 3 mit Stellelement 41 und Schiene 2, die einander zugeordnete Führungsflächen 21 und Gleitflächen 31, 42 parallel zueinander verlaufen. Somit ist die Linearführung 1 als Prismenführung ausgebildet.

Das Stellelement 41 ist zur Spielreduzierung in Einstellrichtung e senkrecht zu der Verschiebungsrichtung v in einer an dem Schlitten 3 vorgesehenen Aufnahme 32 (Figur 3a) verschieblich in demselben angeordnet. Das Stellelement 41 ist in dem Schlitten 3 integriert.

Das Stellelement 41 ragt, wie insbesondere in Figuren 2a und 3a ersichtlich, zur Spielreduzierung in einer Arbeitsposition, d.h. in Einbaulage des Schlittens 3 an der Schiene 2, endseitig in Einstellrichtung e mit seiner Gleitfläche 42 lediglich um einen geringen Betrag b über die Außenkontur des Schlittens 3 hinaus, um, in Überbrückung und damit Verringerung des Spiels, mit seiner weiteren Gleitfläche 42 flächig an der ihm gegenüberliegenden Führungsfläche 21 der Schiene 2 anzuliegen. Dieser Überstand ist auch hinsichtlich der weiteren Gleitfläche 42 des Stellelementes 41 über die ihm zugeordnete Gleitfläche 31 des Schlittens 3 zu beobachten. Dieser Betrag b kann gleich oder etwa gleich dem der Spielreduzierung sein bzw. gleich derselben gesetzt werden. Die Erfindung ist jedoch nicht auf den in den Figuren 2a und 3a dargestellten Betrag b begrenzt und kann unter Umständen erheblich davon abweichen.

Das Stellelement 41 wird in Einstellrichtung e bezüglich einer Längsachse 1 radial nach außen mit einer Kraft beaufschlagt, die das Stellelement 41 über einen in Figur 3a eingezeichneten Stellweg w gegen die zugeordnete Führungsfläche 21 der Schiene 2 drückt und gegebenenfalls an derselben abgleitet. Damit kann eine praktisch spielfreie Lagerung des Schlittens 3 in der Schiene 2 erzielt werden. Infolge des Abgleitens der Gleitflächen 21, 31, 42 aneinander erfolgt die Einstellung des Spiels stufenlos.

Wie insbesondere Figuren 3 und 3a entnehmbar, weist das Stellelement 41 eine Federaufnahme 43 mit einer hier als Spiralfeder ausgebildeten und gegen Ausknicken in einer Hülse 44 geführten Feder 45 auf, wobei die Feder 45 beidendseitig aus der Hülse herausragt. Die Feder 45 ist vorgespannt in der Federaufnahme 43 angeordnet. Sie stützt sich antriebseitig an dem Schlitten 3 und abtriebsseitig an dem Stellelement 41 ab, wodurch das Stellelement 41 zu der ihm zugeordneten Führungsfläche 21 der Schiene 2 hin gedrückt wird. Wegen der an sich geringen Änderungen des Federweges bei der selbsteinstellenden Spielreduzierung im Betrieb der Linearführung kann die Federkraft als konstant angenommen werden. Zur Vermeidung von die Federkraft verändernden Kriechvorgängen wie bei Kunststoffen ist die Feder hier aus Stahl gefertigt.

Die sonstigen Bestandteile des Schlittens 3 und des Stellelements 41 sind hingegen vorzugsweise aus einem tribologisch optimierten Kunststoff hergestellt, welcher schmierfrei mit der Schiene 2 zusammenwirkt. Die Schiene 2 kann aus Metall, insbesondere aus Aluminium, vorzugsweise anodisiertem Aluminium, z.B. als Strangpressprofil gefertigt sein. Dies erlaubt u.a. eine verschleißarme Metall-Kunststoff-Gleitreibung.

Schiene 2 und Schlitten 3 weisen jeweils zwei Gleitflächenpaare 5 auf, wobei die beiden Gleitflächenpaare 5 der Schiene 2 jeweils zwei Führungsflächen 21 und die beiden Gleitflächenpaare 5 des Schlittens 3 jeweils zwei Gleitflächen 31 aufweisen (Figur 2). Die Führungsflächen 21 bzw. Gleitflächen 31 jedes der Gleitflächenpaare 5 sind bezüglich der Verschiebungsrichtung v senkrecht und radial nach außen in einem Keilwinkel ß keilförmig zusammenlaufend angeordnet. Zur Vermeidung von Selbsthemmung ist der Keilwinkel ß größer als der Keilwinkel, bei dem Selbsthemmung auftritt. Auch wegen der keilartig angeordneten Führungsflächen 21 bzw. Gleitflächen 31 ist die dargestellte Ausführungsform für die Einstellung einer bestimmten Schwergängigkeit geeignet.

Die beiden Gleitflächenpaare 5 der Schiene 2 und die beiden Gleitflächenpaare 5 des Schlittens 3 sind jeweils bezüglich einer mittigen Spiegelsymmetrieebene S (Siehe Figur 2 senkrecht zur Bildebene) senkrecht zur Einstellrichtung e spiegelsymmetrisch zueinander angeordnet. Somit laufen die Innenkontur der Schiene 2 zur Aufnahme des Schlittens 3 und die Außenkontur des Schlittens 3 zum Eingriff in die Innenkontur der Schiene 2 in Einstellrichtung e keilförmig zusammen, wodurch der Schlitten 3 zur Verschiebungsrichtung v verdrehfest in der Schiene 2 gelagert angeordnet ist.

Es sind, wie in der in den Figuren gezeigten Ausführungsform der Linearführung 1 vorgesehen, lediglich an einer der Gleitflächen 31 hier zwei Stellelemente 41 vorgesehen, welches jedoch ausreicht, um das Spiel zwischen den anderen Führungsflächen 21 und Gleitflächen 31 einzustellen. Durch die Stellelemente 41 wird zunächst lediglich das Spiel zu einer Führungsfläche 21 der Schiene 2 hin eingestellt bzw. reduziert. Unter der Wirkung der Federkraft wird diese Reduzierung des Spiels durch Verschieben des Schlittens 3 in der Innenkontur der Schiene 2 zu den übrigen Führungsflächen 21 der Schiene 2 hin weiter ausgeführt. Hierbei unterstützt die keilförmige Anordnung der Flächen 21, 31 eine weitgehende Spielreduzierung bis hin zur Schwergängigkeit, da über das Abgleiten der zugeordneten Flächen 21, 31, 42 aneinander der Schlitten 3 in der Schiene 2 verkeilt wird. Die beiden Stellelemente 41 sind hier übrigens, in Längsrichtung 1 voneinander beabstandet, endseitig jeweils in einer Aufnahme 32 gleitverschieblich gelagert.

Die Aufnahme 32 für das Stellelement 41 weist eine in einer radial-axialen Ebene, die zugleich die Winkelhalbierende für den Keilwinkel ß ist, liegende Seitenfläche 33 auf, an der das Stellelement 41 unter gleitverschieblichen Anlage in Einstellrichtung e, d.h. hier genau senkrecht zur Verschiebungsrichtung v geführt ist.

Wie den Figuren 3 und 3a entnehmbar, ist der Stellweg w des Stellelementes 41 in der Aufnahme 32 durch Anschläge 46 begrenzt. Hierzu stößt das Stellelement 41 gegen Einstellrichtung e bodenseitig an der Aufnahme 32 an. Zur Begrenzung des Stellweges w in Einstellrichtung e weisen Stellelement 41 und Aufnahme 32 jeweils einen Rücksprung 47 als Anschlag 46 auf, an denen sie gegeneinander geführt werden.

Das Stellelement 41 ist im Wesentlichen plattenförmig und schmal ausgebildet. Seine Erstreckung in Verschiebungsrichtung v ist wesentlich kleiner als seine Erstreckung in Einstellrichtung e. Damit ist seine Seitenfläche, in der es gleitverschieblich an der Seitenfläche 45 der Aufnahme 32 anliegt, bei gegebener Breite des Schlittens 3 relativ klein. Somit sind bezüglich der Geometrie die Reibungskräfte beim Verschieben des Stellelementes 41 in der Schiene 2 gering, so dass die Federkraft der Feder 45 in Vereinfachung des Aufbaus und der Montage ebenfalls nur entsprechend gering ausgelegt werden muss. Somit ist eine feinere Einstellung des Spiels möglich.

Wie in Figur 1 bzw. 2 ersichtlich, weisen Schiene 2 und Schlitten 3 jeweils zwei übliche Öffnungen 6 beispielsweise zur Befestigung der Schiene 2 an einer Basis bzw. zur Befestigung eines Aufbaus an dem Schlitten 3 auf.

Weitere nennenswerte Vorteile der Erfindung sind:
- schmierfreier Lauf (ohne Schmiermittel);
- stufenloses, sanftes Gleiten des Schlittens;
- guter Halt des Schlittens (Positionsfestigkeit);
- konstante Verschiebekräfte;
- leiser und klapperfreier Lauf; und
- kompakte Bauform.

Die Linearführung 1 gemäß der Erfindung ist damit für viele Zwecke geeignet, insbesondere für den Möbelbau, die Verstellung von Kopfstützen und Lehnen z.B. im Kfz-Bereich, die Höhenverstellung in Küchengeräten oder die Mechanik von 3D-Druckern.

### Bezugszeichenliste

- 1: Linearführung
- 2: Schiene
- 21: Führungsfläche
- 3: Schlitten
- 31: Gleitfläche
- 32: Aufnahme
- 33: Seitenfläche
- 4: Spielreduzierung
- 41: Stellelement
- 42: weitere Gleitfläche
- 43: Federaufnahme
- 44: Hülse
- 45: Feder
- 46: Anschlagweg
- 47: Rücksprung
- 5: Gleitfächenpaar
- 6: Öffnung
- ß: Keilwinkel
- b: Betrag
- e: Einstellrichtung
- 1: Längsrichtung
- v: Verschiebungsrichtung
- w: Stellweg
- S: Spiegelsymmetrieebene

## Patentansprüche

1. Linearführung, aufweisend einen Schlitten (3) mit Gleitflächen (31), eine Schiene (2) mit Führungsflächen (21), wobei der Schlitten (3) mit seinen an den Führungsflächen (21) angepassten Gleitflächen (31) in einer Verschiebungsrichtung (v) hin und her gleitverschieblich an den Führungsflächen (21) der Schiene (2) geführt ist, und eine selbsteinstellende Spielreduzierung (4) der Linearführung (1) mit mindestens einem Stellelement (41), wobei das Stellelement (41) in einer Einstellrichtung (e) senkrecht zu der Verschiebungsrichtung (v) des Schlittens (3) in dem Schlitten (3) gelagert ist und der Schlitten (3) eine Aufnahme (32) aufweist, in der das Stellelement (41) in Einstellrichtung (e) gleitverschieblich geführt ist,
**dadurch gekennzeichnet, dass**
die Aufnahme in einer der angepassten Gleitflächen(31) einmündet und dass das Stellelement (41) eine weitere Gleitfläche (42) aufweist, die einen Teilabschnitt dieser zugeordneten angepassten Gleitfläche (31) des Schlittens (3) bilden kann, wobei die weitere Gleitfläche (42) zur Spielreduzierung um einen entsprechenden Betrag (b) über diese zugeordnete angepasste Gleitfläche (31) übersteht.

2. Linearführung nach Anspruch 1,
**dadurch gekennzeichnet, dass** das Stellelement (41) zur Spielreduzierung in Einstellrichtung (e) mit einer konstanten oder nahezu konstanten Kraft beaufschlagt ist.

3. Linearführung nach Anspruch 2,
**dadurch gekennzeichnet, dass** die Kraft eine Federkraft ist.

4. Linearführung nach einem der vorhergehenden Ansprüche,
**dadurch gekennzeichnet, dass** das Stellelement (41) in dem Schlitten (3) integriert angeordnet ist, wobei es in einer Arbeitsposition zumindest oder genau um den Betrag (b) der Spielreduzierung über die Außenkontur des Schlittens (3) hinaus ragt.

5. Linearführung einem der vorhergehenden Ansprüche,
**dadurch gekennzeichnet, dass** die selbsteinstellende Spielreduzierung (4) stufenlos erfolgt.

6. Linearführung nach einem der vorhergehenden Ansprüche,
**dadurch gekennzeichnet, dass** die Führungsflächen (21) und Gleitflächen (31, 42) prismatische Flächen sind.

7. Linearführung nach einem der Ansprüche 1 bis 6,
**dadurch gekennzeichnet, dass** der Schlitten (3) ein Gleitflächenpaar (5) mit zwei Gleitflächen (31) aufweist, von denen eine die dem Stellelement (41) zugeordnete Gleitfläche (42) ist, wobei die beiden Gleitflächen (31) des Gleitflächenpaares (5), bezüglich der Verschiebungsrichtung (v) des Schlittens (3) in der Schiene (2), quer nach außen in einem Keilwinkel (ß) keilförmig zusammenlaufend angeordnet sind.

8. Linearführung nach Anspruch 7,
**dadurch gekennzeichnet, dass** die Aufnahme (32) eine in einer bezüglich der Verschiebungsrichtung (v) queraxialen Ebene liegende Seitenfläche (33) zur gleitverschieblichen Anlage des Stellelements (41) aufweist, wobei diese Ebene die Winkelhalbierende des Keilwinkels (ß) ist.

9. Linearführung nach einem der Ansprüche 1 bis 8, insbesondere nach Anspruch 8,
**dadurch gekennzeichnet, dass** das Stellelement (41) mit begrenztem Stellweg (w) in der Aufnahme (32) geführt angeordnet ist, wobei der Stellweg (w) über mindestens einen Anschlag (46) begrenzt ist.

10. Linearführung nach Anspruch 7 oder 8,
**dadurch gekennzeichnet, dass** der Keilwinkel (ß) größer als der Selbsthemmungskeilwinkel ist, bei dem infolge erhöhter Reibungskräfte beim Verfahren des Schlittens (3) eine Selbsthemmung einsetzt.

11. Linearführung nach einem der Ansprüche 7, 8 oder 10,
**dadurch gekennzeichnet, dass** der Schlitten (3) zwei Gleitflächenpaare (5) aufweist, wobei eines der Gleitflächenpaare (5) die dem Stellelement (41) zugeordnete Gleitfläche (42) aufweist und die beiden Gleitflächenpaare (5) bezüglich einer Spiegelsymmetrieebene (S) senkrecht zur Einstellrichtung (e) spiegelsymmetrisch zueinander angeordnet sind.

12. Linearführung nach einem Ansprüche 1 bis 11,
**dadurch gekennzeichnet, dass** der Schlitten (3) und das mindestens eine Stellelement (41) aus demselben Kunststoff hergestellt sind und schmierfrei mit der Schiene (2) zusammenwirken, wobei die Schiene (2) aus Metall hergestellt ist.

13. Linearführung nach einem Ansprüche 1 bis 12,
**dadurch gekennzeichnet, dass** ein einziges Stellelement (41) vorgesehen ist und dieses Stellelement (41) bezüglich der Verschiebungsrichtung (v) mittig an dem Schlitten (3) angeordnet ist.

14. Linearführung nach einem Ansprüche 1 bis 12,
**dadurch gekennzeichnet, dass** zwei Stellelemente (41) vorgesehen sind und diese jeweils in einem axialen Endbereich des Schlittens (3) angeordnet und einer gemeinsamen Führungsfläche (21) der Schiene (2) zugeordnet sind.

15. Schlitten für eine Linearführung nach einem der Ansprüche 1 bis 14 mit einer Schiene (2) mit Führungsflächen (21), wobei der Schlitten (3), zu seiner gleitverschieblichen Führung in einer Verschiebungsrichtung (v) hin und her, an die Führungsflächen (21) der Schiene (2) angepasste Gleitflächen (31) und zur selbsteinstellende Spielreduzierung (4) der Linearführung (1) mindestens ein Stellelement (41) aufweist, wobei das Stellelement (41) in einer Einstellrichtung (e) senkrecht zu der Verschiebungsrichtung (v) des Schlittens (3) gelagert ist und,
**dadurch gekennzeichnet, dass**
das Stellelement (41) in dem Schlitten (3) gelagert ist, wobei der Schlitten (3) eine Aufnahme (32) aufweist, in der das Stellelement (41) in Einstellrichtung (e) gleitverschieblich geführt ist und die in einer der angepassten Gleitflächen (31) einmündet, und dass das Stellelement (41) eine weitere Gleitfläche (42) aufweist, die einen Teilabschnitt dieser zugeordneten angepassten Gleitfläche (31) des Schlittens (3) bilden kann, wobei die weitere Gleitfläche (42) zur Spielreduzierung um einen entsprechenden Betrag (b) über diese zugeordnete angepasste Gleitfläche (31) übersteht.

## Claims

1. A linear guide having a slider (3) with slide surfaces (31), a rail (2) with guide surfaces (21), wherein the slider (3) is guided with its slide surfaces (31) adapted to the guide surfaces (21) in slidingly displaceable reciprocating manner in a displacement direction (v) at the guide surfaces (21) of the rail (2), and a self-adjusting play reduction (4) of the linear guide (1) with at least one adjusting element (41), wherein the adjusting element (41) is mounted in the slider (3) in an adjustment direction (e) perpendicular to the displacement direction (v) of the slider (3) and the slider (3) has a receiving seat (32) in which the adjusting element (41) is guided in slidingly displaceable manner in the adjustment direction (e) **characterised in that**
the receiving seat opens into an associated one of the adapted slide surfaces (31) and **in that** the adjusting element (41) has a further slide surface (42) capable of forming a portion of said associated one of the adapted slide surfaces (31) of the slider (3), wherein in order to reduce play said further slide surface (42) projects by a corresponding amount (b) beyond said associated one of the adapted slide surfaces (31).

2. A linear guide according to claim 1 **characterised in that** for play reduction the adjusting element (41) is acted upon in the adjustment direction (e) with a constant or almost constant force.

3. A linear guide according to claim 2 **characterised in that** the force is a spring force.

4. A linear guide according to one of the preceding claims **characterised in that** the adjusting element (41) is arranged integrated in the slider (3), wherein in a working position it projects beyond the outside contour of the slider (3) at least or precisely by the amount (b) of the play reduction.

5. A linear guide according to one of the preceding claims **characterised in that** the self-adjusting play reduction (4) is effected steplessly.

6. A linear guide according to one of the preceding claims **characterised in that** the guide surfaces (21) and the slide surfaces (31, 42) are prismatic surfaces.

7. A linear guide according to one of claims 1 to 6 **characterised in that** the slider (3) has a slide surface pair (5) having two slide surfaces (31), of which one is the slide surface (42) associated with the adjusting element (41), wherein the two slide surfaces (31) of the slide surface pair (5) are arranged convergingly in a wedge-shape and, with respect to the displacement direction (v) of the slider (3) in the rail (2), transversely outwardly in a wedge angle (β).

8. A linear guide according to claim 7 **characterised in that** the receiving seat (32) has a side surface (33) disposed in a plane that is transvers and axial with respect to the displacement direction (v) for slidingly displaceable contact of the adjusting element (41), wherein said plane is the angle bisector of the wedge angle (β).

9. A linear guide according to one of claims 1 to 8, in particular according to claim 8, **characterised in that** the adjusting element (41) is arranged guided with a limited adjustment travel (w) in the receiving seat (32), wherein the adjustment travel (w) is limited by way of at least one abutment (46).

10. A linear guide according to one of claims 7 or 8 **characterised in that** the wedge angle (β) is larger than the self-locking wedge angle, at which a self-locking action occurs as a consequence of increased frictional forces upon displacement of the slider (3).

11. A linear guide according to one of claims 7, 8 or 10 **characterised in that** the slider (3) has two slide surface pairs (5), wherein one of the slide surface pairs (5) has the slide surface (42) associated with the adjusting element (41) and the two slide surface pairs (5) are arranged in mirror-image symmetrical relationship with each other with respect to a mirror-image plane of symmetry (S) perpendicularly to the adjustment direction (e).

12. A linear guide according to one of claims 1 to 11 **characterised in that** the slider (3) and the at least one adjusting element (41) are made from the same plastic and cooperate lubricant-free with the rail (2), wherein the rail (2) is made from metal.

13. A linear guide according to one of claims 1 to 12 **characterised in that** there is provided a single adjusting element (41) and said adjusting element (41) is arranged on the slider (3) centrally with respect to the displacement direction (v).

14. A linear guide according to one of claims 1 to 12 **characterised in that** there are provided two adjusting elements (41) and they are respectively arranged in an axial end region of the slider (3) and are associated with a common guide surface (21) of the rail (2).

15. A slider for a linear guide according to one of claims 1 to 14 having a rail (2) with guide surfaces (21), wherein, for its slidingly displaceable guidance in reciprocating manner in a displacement direction (v) the slider (3) has slide surfaces (31) adapted to the guide surfaces (21) of the rail (2) and has at least one adjusting element (41) for self-adjusting play reduction (4) of the linear guide (1), wherein the adjusting element (41) is mounted in an adjustment direction (e) perpendicular to the displacement direction (v) of the slider (3), and
**characterised in that** the adjusting element (41) is mounted in the slider (3), wherein the slider (3) has a receiving seat (32) in which the adjusting element (41) is guided in slidingly displaceable manner in the adjustment direction (e) and which opens into an associated one of the adapted slide surfaces (31) and that the adjusting element (41) has a further slide surface (42) capable of forming a portion of said associated one of the adapted slide surfaces (31) of the slider (3), wherein in order to reduce play said further slide surface (42) projects by a corresponding amount (b) beyond said associated one of the adapted slide surfaces (31).

## Revendications

1. Guidage linéaire, comprenant un chariot (3) pourvu de surfaces de glissement (31), un rail (2) pourvu de surfaces de guidage (21), le chariot (3) étant guidé au niveau des surfaces de guidage (21) du rail (2) dans une direction de déplacement (v) selon un mouvement de glissement alternatif par ses surfaces de glissement (31) adaptées aux surfaces de guidage (21), et une réduction de jeu à réglage automatique (4) du guidage linéaire (1) pourvue au moins d'un élément de réglage (41), ledit élément de réglage (41) étant logé dans le chariot (3) dans un sens de réglage (e) perpendiculaire à la direction de déplacement (v) du chariot (3) et le chariot comprenant un logement (32) dans lequel l'élément de réglage (41) est guidé dans la direction de réglage (e) selon un mouvement de glissement,
**caractérisé en ce que**
le logement débouche dans une des surfaces de glissement adaptées (31) et que l'élément de réglage (41) comporte une autre surface de glissement (42), qui peut constituer une section partielle de cette surface de glissement adaptée associée (31) du chariot (3), l'autre surface de glissement (42) débordant, à des fins de réduction du jeu, d'une valeur correspondante (b) de cette surface de glissement adaptée associée (31).

2. Guidage linéaire selon la revendication 1,
**caractérisé en ce que** l'élément de réglage (41) est soumis, à des fins de réduction du jeu dans la direction de réglage (e), à une force constante ou presque constante.

3. Guidage linéaire selon la revendication 2,
**caractérisé en ce que** la force est une force élastique.

4. Guidage linéaire selon l'une des revendications précédentes,
**caractérisé en ce que** l'élément de réglage (41) est disposé de manière intégrée dans le chariot (3), ledit élément de réglage (41) débordant, dans une position de travail, du contour extérieur du chariot (3) au moins ou exactement de la valeur (b) de la réduction de jeu.

5. Guidage linéaire selon l'une des revendications précédentes, **caractérisé en ce que** la réduction de jeu à réglage automatique (4) se fait en continu.

6. Guidage linéaire selon l'une des revendications précédentes, **caractérisé en ce que** les surfaces de guidage (21) et les surfaces de glissement (31, 42) sont des surfaces prismatiques.

7. Guidage linéaire selon l'une des revendications 1 à 6, **caractérisé en ce que** le chariot (3) comporte une paire (5) de surfaces de glissement à deux surfaces de glissement (31), dont l'une est la surface de glissement (42) associée à l'élément de réglage (41), les deux surfaces de glissement (31) de la paire (5) de surfaces de glissement étant disposées, par rapport à la direction de déplacement (v) du chariot (3) dans le rail (2), de façon convergente transversalement vers l'extérieur en forme de coin selon un angle de cale (β).

8. Guidage linéaire selon la revendication 7, **caractérisé en ce que** le logement (32) comporte une surface latérale (33) disposée dans un plan axial transversal par rapport à la direction de déplacement (v) pour la venue en butée mobile par glissement de l'élément de réglage (41), ce plan étant la bissectrice de l'angle de cale (β).

9. Guidage linéaire selon l'une des revendications 1 à 8, en particulier selon la revendication 8, **caractérisé en ce que** l'élément de réglage (41) est disposé de manière guidée dans le logement (32) avec une course de réglage limitée (w), la course de réglage (w) étant limitée par au moins une butée (46).

10. Guidage linéaire selon la revendication 7 ou 8, **caractérisé en ce que** l'angle de cale (β) est plus grand que l'angle de cale d'autoblocage auquel un autoblocage survient à la suite de forces de friction accrues lors du déplacement du chariot (3).

11. Guidage linéaire selon l'une des revendications 7, 8 ou 10, **caractérisé en ce que** le chariot (3) comporte deux paires (5) de surfaces de glissement, l'une desdites paires (5) de surfaces de glissement comprenant la surface de glissement (42) associée à l'élément de réglage (41) et les deux (5) paires de surfaces de glissement étant disposées par rapport à un plan de symétrie spéculaire (S) perpendiculaire à la direction de réglage (e) selon une symétrie spéculaire l'une par rapport à l'autre.

12. Guidage linéaire selon l'une des revendications 1 à 11, **caractérisé en ce que** le chariot (3) et le au moins un élément de réglage (41) sont réalisés dans la même matière plastique et interagissent sans lubrification avec le rail (2), le rail (2) étant réalisé en métal.

13. Guidage linéaire selon l'une des revendications 1 à 12, **caractérisé en ce qu'**un seul élément de réglage (41) est prévu et que ledit élément de réglage (41) est disposé au centre du chariot (3) par rapport à la direction de déplacement (v).

14. Guidage linéaire selon l'une des revendications 1 à 12, **caractérisé en ce que** deux éléments de réglage (41) sont prévus et que ceux-ci sont chacun disposés dans une zone d'extrémité axiale du chariot (3) et associés à une surface de guidage commune (21) du rail (2).

15. Chariot pour un guidage linéaire selon l'une des revendications 1 à 14 avec un rail (2) pourvu de surfaces de guidage (21), le chariot (3) comportant, en vue de son guidage de glissement dans un sens de déplacement alternatif (v), des surfaces de glissement (31) adaptées aux surfaces de guidage (21) du rail (2) et, en vue de la réduction du jeu (4) à réglage automatique du guidage linéaire (1), au moins un élément de réglage (41), ledit élément de réglage (41) étant logé dans une direction de réglage (e) perpendiculaire à la direction de déplacement (v) du chariot et **caractérisé en ce que** l'élément de réglage (41) est logé dans le chariot (3), le chariot (3) comprenant un logement (32) dans lequel l'élément de réglage (41) est guidé dans la direction de réglage (e) selon un mouvement de glissement et qui débouche dans une des surfaces de glissement adaptées (31), et que l'élément de réglage (41) présente une autre surface de glissement (42) qui peut constituer une section partielle de cette surface de glissement adaptée associée (31) du chariot (3), l'autre surface de glissement (42) débordant, à des fins de réduction du jeu, d'une valeur correspondante (b) de cette surface de glissement adaptée associée (31).
